# EUROPÄISCHE PATENTANMELDUNG

(11) **EP 1 544 085 A2**
(43) Veröffentlichungstag der Anmeldung: **22.06.2005**
(21) Anmeldenummer: 04029800.2
(22) Anmeldetag: 15.12.2004
(51) Int. Cl.: B62D 25/14, B62D 29/00

(54) **Querträger eines Fahrzeugs, insbesondere Hybridquerträger**

(30) Priorität: 18.12.2003 DE 10360045; 31.03.2004 DE 102004016533
(71) Anmelder: Intier Automotive Interiors GmbH, 63877 Sailauf (DE)
(72) Erfinder: Hellfritsch, Erhard, 63843 Niedernberg (DE); Cremer, Markus, 60293 Darmstadt (DE)

(57) **Zusammenfassung**

Ein Hybridquerträger (1) für ein Fahrzeug umfasst eine metallische Querstrebe (2) mit einem in Hauptrichtung des Hybridquerträgers in der Form einer offenen Rinne verlaufenden Abschnitt, dessen Längskanten (21,22) mit einem Strukturelement aus Kunststoff (3) in einem Abschnitt vorzugsweise durch eine Klebenaht verbunden sind. Weiterhin wird ein Hybridquerträger (1) für ein Fahrzeug vorgeschlagen mit einer metallische Querstrebe (2), die einen in Richtung der Hauptrichtung des Hybridquerträgers in der Form einer offenen Rinne verlaufenden Abschnitt umfasst, und einer daran außermittig angebrachte Lenkstockanbindung (5) sowie einer innerhalb des Profils der metallischen Querstrebe im Bereich der Lenkstockanbindung (5) angeordneten Hilfsstrebe.

Alternativ umfasst ein Hybridquerträger (1) für ein Fahrzeug einen Querträger mit einer Hauptstrebe, die einen in Richtung der Hauptrichtung des Querträgers in der Form einer offenen Rinne verlaufenden Abschnitt hat, eine dazu benachbart angeordnete Hilfsstrebe, eine Tunnelstütze (6,7) und eine Lenkstockanbindung (5), wobei die Hilfsstrebe mit der Tunnelstütze und der Lenkstockanbindung drehsteif verbunden ist.

## Beschreibung

Die vorliegende Erfindung betrifft einen Querträger und insbesondere einen Hybridquerträger für ein Fahrzeug.

Hybridtechnologien werden allgemein eingesetzt, um die hohe mechanische Festigkeit von metallischen Werkstoffen mit dem geringen Gewicht und der einfachen Formbarkeit von Kunststoffen vorteilhaft zu verbinden. Insofern eignen sich Hybridtechnologien in vielen Fällen auch für Anwendungen im Automobilbereich. Dies gilt jedenfalls für den hinter der Instrumententafel zwischen den A-Säulen verlaufenden Querträger. Dieser ist dazu vorgesehen, starr gegenüber der Fahrzeugkarosse festgelegte Anbindungspunkte insbesondere für das lenkradseitige Lenkstocklager, die Instrumententafel und das Klimagerät bereitzustellen. Hierbei ist hervorzuheben, dass der Querträger wunschgemäß möglichst steif sein muss, um die aus der Lenkstockanbindung über das Lenkrad eingeleiteten Kräfte ohne erkennbares Nachgeben oder Nachfedern abstützen zu können. Überdies verlagert eine große Festigkeit bei geringem Gewicht die Frequenzen der Resonanz für den Querträger aus dem Bereich der vom Motor hervorgerufenen Vibrationen heraus und trägt damit zur Verbesserung des wahrgenommenen Fahrkomforts bei. Dies kann mit einem Kunststoffbauteil meist nicht zweckmäßig erreicht werden. Zudem wird der Querträger aber auch große Raumvolumen umschließen, um eine ausreichende mechanische Stabilität zu erhalten. Um die vom Querträger umschlossenen Raumvolumen nutzen zu können, wird vorgeschlagen diese insbesondere für die Aufnahme von Luftführungen zur Belüftung und Klimatisierung der Fahrgastkabine, von Kabelsträngen oder dergleichen einzurichten. Ein derart komplexes Gebilde von untereinander verbundenen Hohlräumen und Öffnungen kann aus Metall meist nur mit Schwierigkeiten und hohem Gewicht oder hohen Kosten angefertigt werden.

Aus der EP 1 323 623 A1 ist ein erster gebräuchlicher Hybridquerträger bekannt, bei dem eine insgesamt verhältnismäßig kleine steife metallische Querstrebe von einem verhältnismäßig großen Strukturelement aus Kunststoff überwiegend bereichsweise umschlossen wird. Dadurch sollen alle auf das Strukturelement aus Kunststoff eingeprägten äußeren Kräfte direkt und ohne erkennbares Nachgeben oder Nachfedern desselben auf die metallische Querstrebe abgestützt werden. Andererseits bietet Kunststoff als Werkstoff die Möglichkeit, das großvolumig ausgelegt und mit eingeschlossenen Luftführungen ausgestattete Strukturelement aus Kunststoff vergleichsweise kostengünstig zu fertigen.

Allerdings muss bei dem vorgenannten Hybridquerträger die Umschließung der metallischen Strebe durch das zweiteilige Strukturelement maßhaltig erfolgen, um die hinlänglich bekannte vorteilhafte Stärkung der Tragfähigkeit der metallischen Querstrebe aufgrund der durch das anliegende Strukturelement aus Kunststoff bewirkten Kraftverteilung zu erzielen. Ein derartiges zumindest bereichsweise passgenaues Einformen der metallischen Querstrebe in das Strukturelement aus Kunststoff setzt üblicherweise das Umspritzen des in das Kunststoffformwerkzeug eingelegten Metallteils voraus. Mit einem solchen Verfahren kann der von einer rinnenförmigen Querstrebe umschlossene Raum praktisch nur durch eine nach außen offene Verrippung gefüllt werden, nicht jedoch als ein zusätzlicher Bauraum für eine Luftführung oder dergleichen mitverwendet werden.

Andere Ansätze, wie beispielsweise der in der EP 0 370 342 A1 offenbarte, beruhen darauf, das metallische Tragelement mit dem Strukturelement aus Kunststoff an einer ausreichend großen Anzahl von Stellen formschlüssig zu verbinden, um dadurch ein unmittelbares Zusammenwirken der beiden Strukturen zu gewährleisten. Diese und vergleichbare Ansätze gehen gleichermaßen wie die zuerst geschilderten von einem Umspritzen der in das Kunststoffformwerkzeug eingelegten metallischen Querstrebe aus und können folglich die vorgenannten Nachteile ohne weiteres nicht überwinden.

Die vorliegende Erfindung stellt sich mithin die Aufgabe, einen Querträger und insbesondere einen Hybridquerträger mit geringem Gewicht und hoher Festigkeit zu schaffen, dessen Herstellung kostengünstig möglich ist. Die vorliegende Erfindung stellt sich weiterhin die Aufgabe, einen Querträger und insbesondere einen Hybridquerträger mit geringem Gewicht und hoher Torsionssteifigkeit zu schaffen, dessen Herstellung kostengünstig möglich ist.

Diese Aufgabe wird unter einem ersten Aspekt gelöst durch einen Querträger mit den Merkmalen nach dem unabhängigen Ansprüche 1. Vorteilhafte Weiterbildungen dieser Lösung sind in den Unteransprüchen _ bis _ angegeben.

Unter einem weiteren Aspekt wird diese Aufgabe gelöst durch einen Hybridquerträger für ein Fahrzeug mit einer metallische Querstrebe mit einem in Richtung der Hauptrichtung des Hybridquerträgers in der Form einer offenen Rinne verlaufenden Abschnitt und eine daran außermittig angebrachten Lenkstockanbindung, wobei innerhalb des Profils der metallischen Querstrebe im Bereich der Lenkstockanbindung eine Hilfsstrebe angeordnet ist.

Der im vorangehenden Absatz beschriebene Hybridquerträger kann natürlich auch durch die Merkmalskombinationen der Ansprüche _ bis _ fortgebildet werden.

Insbesondere kann sich die Hilfsstrebe im wesentlichen ausgehend von dem in Bezug auf die Lenkstockanbindung benachbarten Ende der metallischen Querstrebe bis zum Anbindungspunkt einer in Bezug auf die Lenkstockanbindung benachbarten Frequenzstrebe erstrecken. Die Hilfsstrebe kann wiederum ein Abschnitt eines Strangpressprofils oder ein Winkelprofil sein. Ferner kann die Hilfsstrebe mit der metallischen Querstrebe verklebt oder verschweißt sein.

Unter noch einem weiteren Aspekt löst die vorliegende Erfindung die angegebene Aufgabe durch einen Querträger mit den Merkmalen des Anspruch 6.Vorteilhafte Weiterbildungen dieses Querträgers ergeben sich aus den Unteransprüchen.Die an den Hybridquerträgern vorgesehene Klebeverbindung gleicht vorteilhaft Fertigungstoleranzen der metallischen Querstrebe aus und führt zu einer festen und spielfreien Verbindung mit dem Strukturelement aus Kunststoff. Das an der der Fahrgastzelle zugewandten Seite des Hybridträgers vorgesehene Strukturelement aus Kunststoff bietet zudem ausreichende Möglichkeiten zu Integration von Befestigungsstellen in diesem Bereich. Auf der von der Fahrgastzelle abgewandten Seite des Hybridquerträgers sind in der Regel nur wenige Befestigungspunkte erforderlich, so dass sich das Strukturelement aus Kunststoff regelmäßig nicht in diesen Bereich hinein zu erstrecken braucht. Die in Längsrichtung profilierte metallische Strebe ist ausreichend groß ausgelegt, um Luftführungen der Fahrzeugbelüftung aufnehmen zu können.

Bevorzugte Ausführungsformen der vorliegenden Erfindung werden nachfolgend im einzelnen beispielhaft beschrieben, wobei auf die beigefügten Zeichnungen Bezug genommen wird. Darin zeigen:
- Fig. 1: eine perspektivische Ansicht eines ersten Hybridquerträgers schräg von vorne rechts;
- Fig. 2: eine perspektivische Ansicht einer ersten Teilstruktur des Hybridquerträgers gemäß Fig. 1 schräg von links;
- Fig. 3: eine perspektivische Ansicht eines Ausschnitts aus einer weiteren Teilstruktur eines Hybridquerträgers gemäß Fig. 1;
- Fig. 4: eine Schnittansicht entlang einer vertikalen Schnittebene im Bereich der Lenkstockanbindung durch den Hybridquerträger gemäß Fig. 1;
- Fig. 5: eine Schnittansicht entlang einer vertikalen Schnittebene im Bereich der Lenkstockanbindung durch einen zweiten Hybridquerträger;
- Fig. 6: eine perspektivische Explosionsansicht eines dritten Querträgers;
- Fig. 7: eine perspektivische Ansicht einer Teilstruktur des Querträgers gemäß Fig. 6; und
- Fig. 8: eine perspektivische Ansicht auf einen Abschnitt der Rückseite des Querträgers gemäß Fig. 6 von unten.

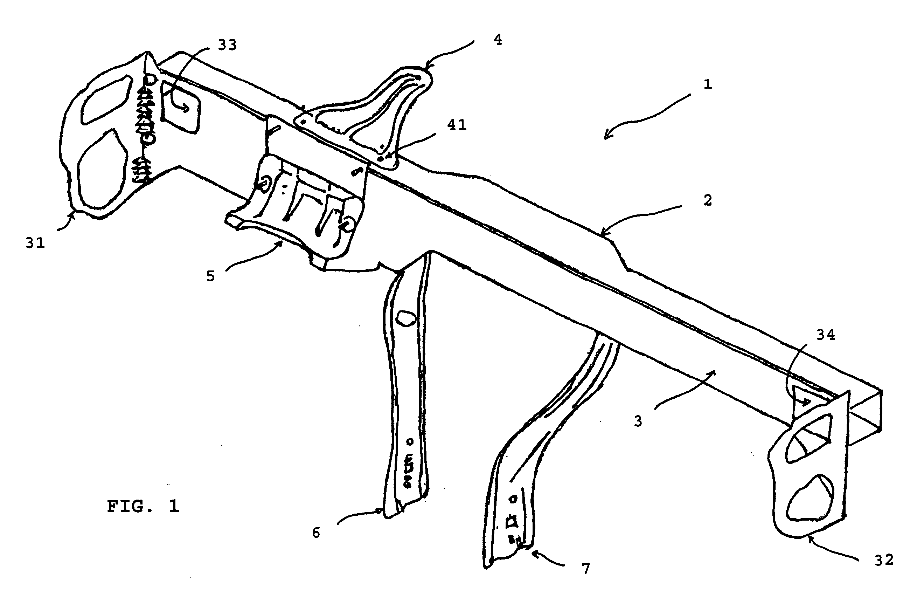

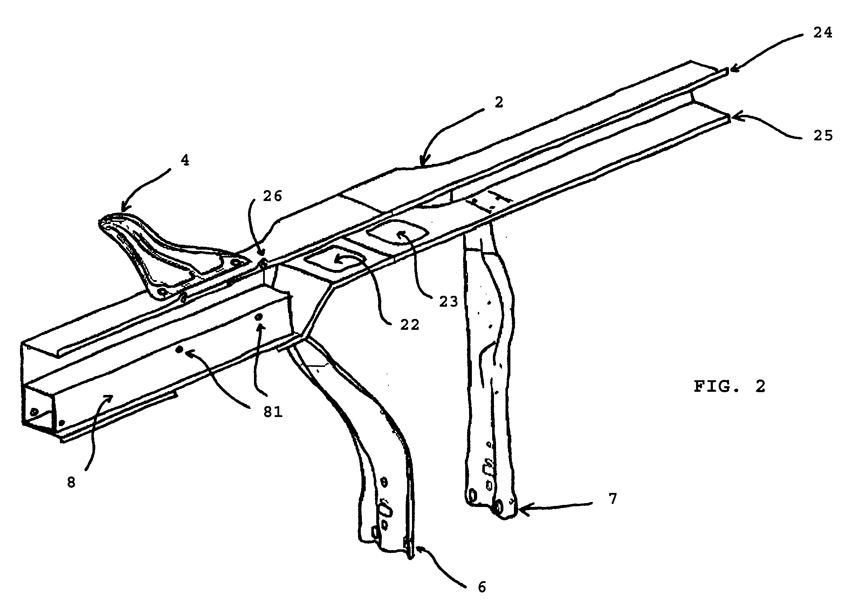

Ein erster Hybridquerträger 1 zum Einbau in ein linksgelenktes Fahrzeug umfasst gemäß Fig. 1 eine metallische Querstrebe 2, ein Strukturelement aus Kunststoff 3, eine Befestigungslasche 4, eine Lenkstockanbindung 5 und zwei Frequenzstreben 6 und 7. Die metallische Querstrebe 2 erstreckt sich im wesentlichen entlang der Richtung der hauptsächlichen Ausdehnung des Hybridquerträgers 1, die nachfolgend auch als dessen Hauptrichtung bezeichnet wird. Die Formgebung der metallischen Querstrebe 2 geht insbesondere aus Fig. 2 hervor, die eine Ansicht auf den Hybridquerträger 1 bei abgenommenem Strukturelement aus Kunststoff 3 zeigt. Quer zur Hauptrichtung des Hybridquerträgers 1 weist die metallische Querstrebe 2 im wesentlichen einen u-förmigen Querschnitt auf, wobei Abmessungen und Gestalt des Querschnitts entlang des Hybridquerträgers 1 variieren. In Hauptrichtung des Hybridquerträgers 1 lassen sich im wesentlichen drei Abschnitte der metallische Querstrebe 2 erkennen, innerhalb derer das Profil nahezu unverändert ist. Zwischen diesen Abschnitten sind verhältnismäßig kurze Übergangszonen vorgesehen, in denen das Profil stetig zwischen den Gestalten der angrenzenden Abschnitte übergeht. Die zum Fahrzeuginnenraum weisenden Kanten der metallischen Querstrebe 2 sind vorzugsweise auf der gesamten Länge vorteilhaft nach außen umgebogen, um zwei langgestreckte schmale Verbindungsflächen 24, 25 zur Verbindung der metallische Querstrebe 2 mit dem Strukturelement aus Kunststoff 3 zu erhalten.

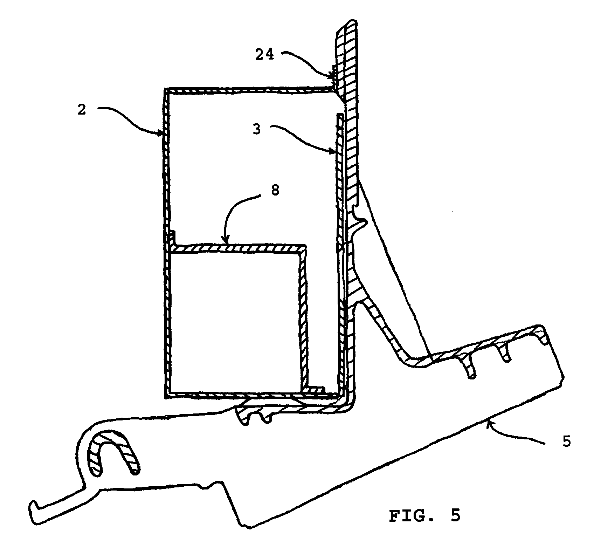

In einem ersten Abschnitt in der Nähe des rechten Endes des Hybridquerträgers 1 ist das u-förmige Profil vergleichsweise flach und schmal ausgebildet. Es ist hierbei anzumerken, dass die als Tiefe des u-förmigen Profils bezeichnete Abmessung am Querschnitt der metallischen Querstrebe 2 für den gezeigten Hybridquerträger 1 nach dessen Einbau in ein Fahrzeug annähernd entlang der Fahrzeuglängsrichtung verläuft, die Breite des u-förmigen Profils hingegen annähernd in auf das Fahrzeug bezogen vertikaler Richtung zu bestimmen ist. In dem vorgenannten ersten Bereich ist der Profilquerschnitt auch verhältnismäßig am kleinsten. Dies trägt dem Umstand Rechnung, dass auf der Beifahrerseite des gezeigten Hybridquerträgers 1 im Gebrauch nur vergleichsweise geringe Kräfte auf diesen eingeleitet werden. Breite und Tiefe des u-förmigen Profils sind in diesem Bereich hauptsächlich durch den innerhalb des Profils zur Aufnahme von Luftführungen und dergleichen gewünschten kanalförmigen Bauraum vorgegeben. In diesem zweiten Abschnitt im Bereich des mittleren Drittels des Hybridquerträgers 1 ist das u-förmige Profil der metallischen Querstrebe 2 annähernd genauso schmal wie im zuvor beschriebenen Abschnitt, jedoch deutlich tiefer ausgebildet als dort. Auf diese Art steht innerhalb des Trägers Raum für weitere Luftführungen und Luftzutritte zur Verfügung. Im letzten Drittel auf der Fahrerseite des Hybridquerträgers 1 nimmt die Tiefe des u-förmigen Profil wieder etwas ab, wobei jedoch gleichzeitig dessen Breite erheblich zunimmt. Neben dem für die Aufnahme der Luftführungen vorgesehenen Bauraum bietet das u-förmige Profil der metallische Querstrebe 2 hier ausreichend Platz für eine metallische Hilfsstrebe 8. Vorzugsweise ist diese Hilfsstrebe 8 ein Abschnitt eines Strangpressteils, eines Rechteckrohrs oder dergleichen. Die Hilfsstrebe 8 ist mit der metallischen Querstrebe 2 im Bereich der benachbarten Flächen vorne und unten zumindest abschnittsweise verbunden. Diese Verbindung kann bei geeigneter Materialwahl beispielsweise durch Schweißen, insbesondere Punktschweißen erfolgen. Alternativ kann die Verbindung auch durch Nieten oder Kleben erfolgen. Letztgenannte Möglichkeiten sind als besonders vorteilhaft anzusehen, weil deren Anwendung erwartungsgemäß nur einen geringen Verzug oder im Fall der Klebeverbindung sogar praktisch keinen Verzug an den Bauteilen hervorrufen wird. Die Auslegung der Hilfsstrebe 8 orientiert sich an den größten bei der Benutzung zu erwartenden durch die Lenkstockanbindung auf den Hybridquerträger 1 eingeprägten Linear- und Torsionskräften. Alternativ kann anstelle der in den Fig. 1 bis 4 dargestellten hohlprofilierten Hilfsstrebe 8 auch ein rechtwinkliges Längsprofil oder eine ähnlich offen profilierte Hilfsstrebe verwendet werden, wie dies in Fig. 5 angedeutet ist.

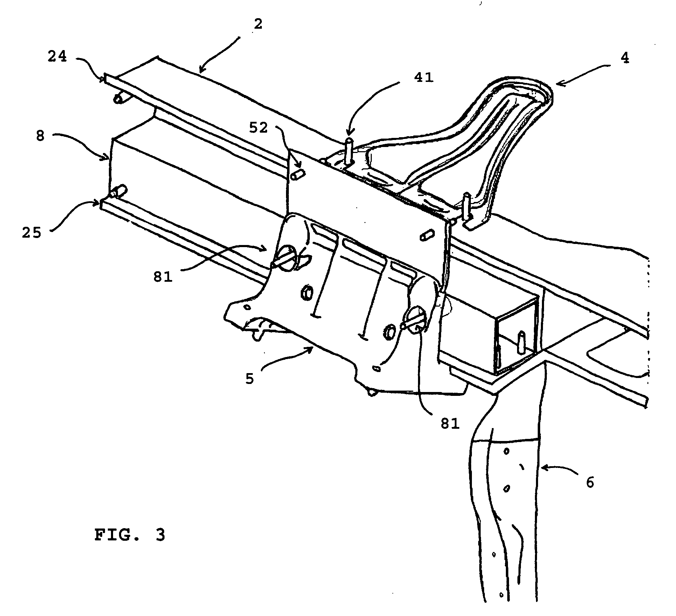

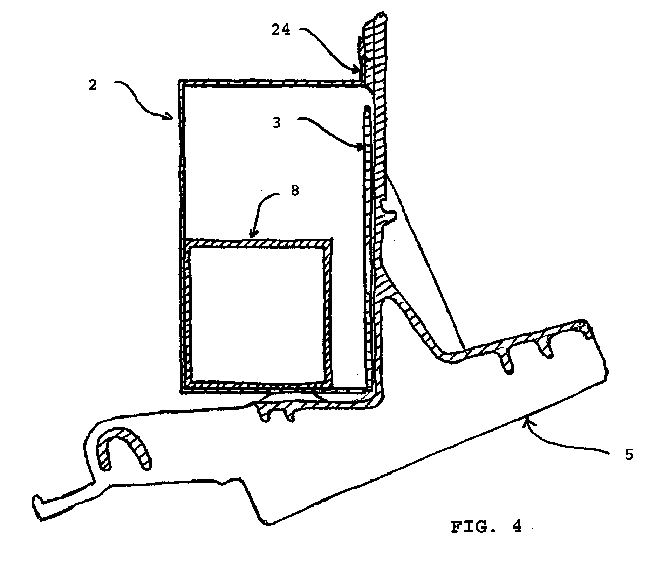

An ihrer der Fahrgastzelle zugewandten Seite ist die metallische Querstrebe 2 mit dem Strukturelement aus Kunststoff 3 verbunden. Die Verbindung erfolgt dabei vorzugsweise durch eine Klebenaht zwischen Oberflächenabschnitten des Strukturelements aus Kunststoff 3 und den Verbindungsflächen 24, 25 des metallische Querstrebe 2. Alternativ kann die Verbindung auch durch mehrere Schrauben, Nieten oder Bördelränder erfolgen. Das Strukturelement aus Kunststoff 3 verläuft im wesentlichen eben entlang der Hauptrichtung des Hybridquerträgers 1. An den Enden des Strukturelements aus Kunststoff 3 sind abgewinkelte Befestigungslaschen 31 und 32 vorgesehen, mit denen der Hybridquerträger 1 an den sogenannten A-Säulen einer Fahrzeugkarosse befestigbar ist. Ferner verfügt das Strukturelement aus Kunststoff 3 vorteilhaft in der Nähe seines linken und rechten Endes jeweils über eine Öffnung 33, 34, die den Durchtritt der Luftführungen aus dem Inneren des Hybridquerträgers 1 in den Bereich der Instrumententafel des Fahrzeugs erlauben. Auf der Fahrerseite weist das Strukturelement aus Kunststoff 3 eine Aussparung zur Aufnahme der Lenkstockanbindung 5 auf. Die Lenkstockanbindung 5 ist aus einem festen Werkstoff, vorzugsweise aus Metall gefertigt. Insbesondere kann hierbei eine druckgegossene Aluminiumlegierung zur Anwendung kommen. Die Lenkstockanbindung 5 weist Befestigungsstellen 51 zur Anbringung der in den Zeichnungen nicht wiedergegebenen.Lenkwellenlagereinheit auf. Ein besonders kompakter und platzsparender Aufbau ergibt sich, wenn im Bereich der Lenkstockanbindung die untere Verbindungsfläche 25 an der metallische Querstrebe 2 unterbrochen ist, wie dies insbesondere aus den Schnittansichten in den Fig. 4 und 5 hervorgeht. Eine besonders stabile Verbindung zwischen Lenkstockanbindung 5, und der metallischen Querstrebe 2 wird erhalten, wenn die obere Verbindungsfläche 24 der metallischen Querstrebe 2 mit Befestigungsaugen 26 ausgestattet und mit einem oberen Abschnitt der Lenkstockanbindung 5 durch Schrauben oder Nieten 52 sind. Eine besonders stabile Verbindung zwischen der Lenkstockanbindung 5 und der Hilfsstrebe 8 wird erhalten, wenn diese Bauteile in einem unteren Bereich der Lenkstockanbindung 5 mit Schrauben 81 und Distanzhülsen gegeneinander gespannt sind, wie dies in Fig. 3 angedeutet ist. Gleichfalls kann die Verbindung zwischen der metallische Querstrebe 2 und der Befestigungslasche 4 durch Schrauben 41 erfolgen, wie dies ebenfalls aus Fig. 3 hervorgeht.

Oberhalb der Lenkstockanbindung 5 ist an der metallischen Querstrebe 2 gemäß Fig. 1 und Fig. 3 eine Befestigungslasche 4 angeordnet. Diese verbindet den Hybridquerträger 1 in eingebautem Zustand mit der Stirnwand unterhalb des Rahmens der Fahrzeugwindschutzscheibe und unterdrückt dadurch wirkungsvoll eine Auslenkung des Hybridquerträgers 1 in Fahrzeuglängsrichtung aufgrund äußerer Krafteinwirkung. Der zwischen dem Hybridquerträger 1 und dem Rahmen der Windschutzscheibe verbleibende Spalt sollte zweckmäßig möglichst groß sein, damit im Fall eines Frontalaufpralls des Fahrzeugs die zum Zusammentreffen von Hybridquerträger 1 und Rahmen der Windschutzscheibe erforderliche Verformung der Fahrzeugkarosse möglichst groß ist und folglich die an dem Hybridquerträger 1 gehalterte Lenkstockanbindung 5 zusammen mit dem nicht wiedergegebenen Lenkrad in diesem Fall möglichst wenig weit in die Fahrgastzelle hinein geschoben wird. Die Befestigungslasche wird vorzugsweise aus Metall gefertigt sein, insbesondere bietet sich ein gepresstes Blechteil an. Bei geeigneter Materialwahl kann die Verbindung zwischen der metallischen Querstrebe 2 und der Befestigungslasche 4 durch Schweißen, insbesondere Punktschweißen erfolgen. Andernfalls kann die Verbindung durch Nieten oder Kleben erfolgen.

In einem mittleren unteren Bereich der metallische Querstrebe 2 sind ferner gemäß den Fig. 1 und 2 Frequenzstreben 6 und 7 angeordnet. Diese sind dazu vorgesehen, den Hybridquerträger 1 im Bereich seiner Mitte gegenüber der Fahrzeugkarosse in senkrechter Richtung festzulegen und dadurch vor allem die erste Eigenschwingung des Hybridquerträgers 1 zu unterdrücken. Zwischen den Frequenzstreben 6, 7 verbleibt ein Bauraum zur Aufnahme von Klimagerät, Rundfunkempfänger und dergleichen. Die Öffnungen 22, 23 an der Unterseite der metallischen Querstrebe 2 ermöglichen hierbei den Durchtritt der Luftführungen vom Klimagerät in den Hybridquerträger 1 hinein, von wo aus sich die Luftführungen nach links und rechts bis zu den seitlichen Austrittsöffnungen 33, 34 in dem Strukturelement aus Kunststoff 3 fortsetzen, um im Bereich des linken und rechten Endes aus dem Innenraum des Hybridquerträgers 1 herauszutreten und in die Luftaustritte in der Instrumententafel übergehen.

Wie aus der Ausschnittansicht in Fig. 3 hervorgeht trifft die Hilfsstrebe 8 in einer besonders bevorzugten Ausführung mit ihrem rechten oder inneren Ende mit dem oberen Ende der Frequenzstrebe 6 zusammen. Dadurch werden vertikal auf die Lenkstockanbindung 5 wirkende Kräfte weniger in die metallische Querstrebe 2 eingeleitet, sondern vor allem von der Hilfsstrebe 8 zwischen der seitlichen Karosserieanbindung 31 links und der Frequenzstrebe 6 aufgeteilt.

Der beschriebene Hybridquerträger 1 wird auf besonders kostengünstige Art erhalten, wenn die metallische Querstrebe 2 aus einem gepressten Stahl- oder Aluminiumblech angefertigt wird. Zweckmäßig werden die Frequenzstreben 6, 7 und die Befestigungslasche 5 aus dem selben Material gefertigt und mit der metallischen Querstrebe 2 verschweißt, vernietet oder verklebt. Anschließend wird die Hilfsstrebe 8 auf der Fahrerseite in die metallische Querstrebe 2 vorzugsweise eingeklebt, wobei ein auf ein eventuell vorangehendes Schweißen oder Punktschweißen der vorbeschriebenen Anordnung aus metallischer Querstrebe 2, Frequenzstreben 6, 7 und Befestigungslasche 5 zurückgehender Verzug der metallischen Querstrebe 2 in der Regel nicht zu einem überschreiten des zulässigen Klebespalts führen wird, ein Richten nach dem Schweißen also unterbleiben kann. Ein kostenaufwändiges Richten wird aus den selben Gründen auch nicht vor dem Zusammenfügen und Verkleben der gesamten in den vorbeschriebenen Schritten geschaffenen Anordnung mit dem Strukturelement aus Kunststoff 3 notwendig sein. Auch in diesem Schritt werden die zulässigen Toleranzen für den Klebespalt den beim Schweißen eventuell auftretenden Verzug in der Regel aufnehmen können.

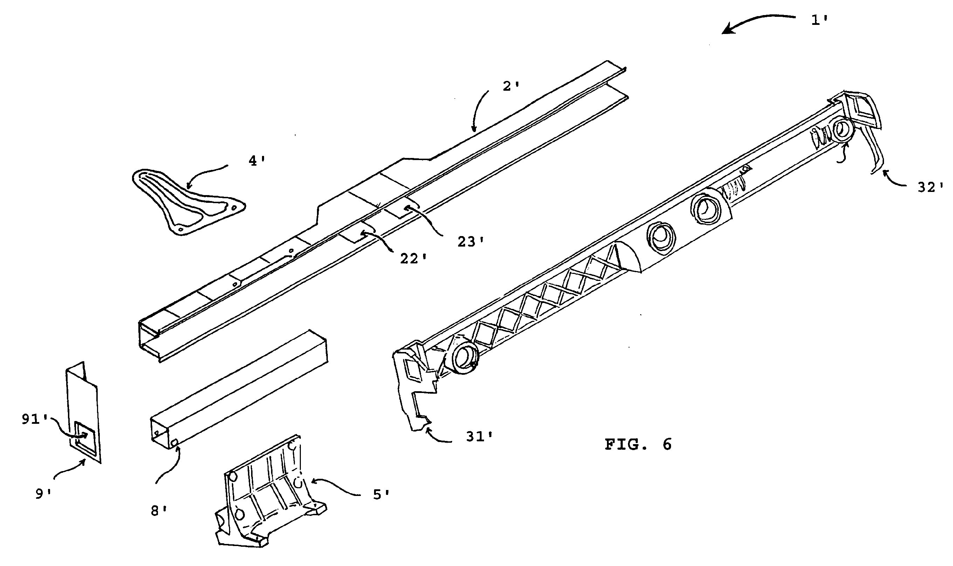

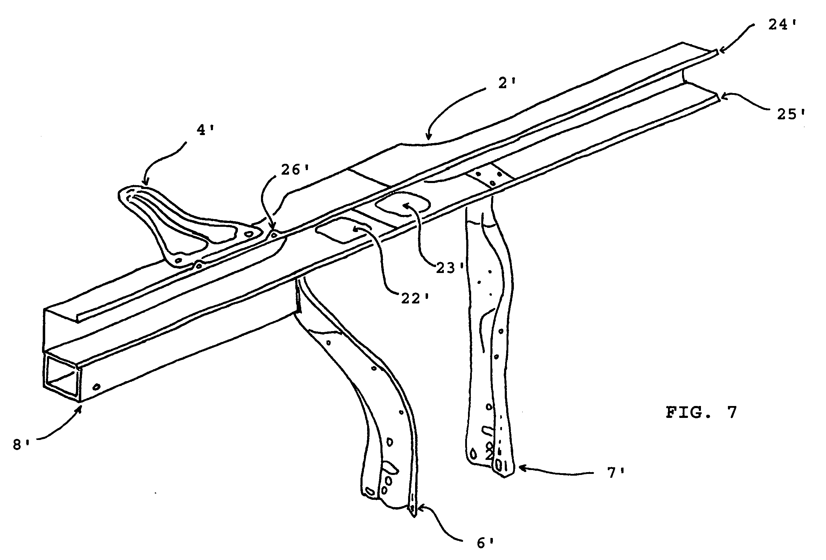

Ein dritter Hybridquerträger 1' zum Einbau in ein linksgelenktes Fahrzeug umfasst gemäß den Fig. 6 und 7 zunächst einen Querträger mit einer Hauptstrebe 2'. Die Hauptstrebe 2' ist vorzugsweise aus einem metallischen Werkstoff gefertigt, z.B. aus gepresstem Stahl- oder Aluminiumblech. Die Hauptstrebe 2' erstreckt sich ferner im wesentlichen entlang der Richtung der hauptsächlichen Ausdehnung des Querträgers 1', die nachfolgend als dessen Hauptrichtung bezeichnet wird. Die Formgebung der Hauptstrebe 2' geht insbesondere aus Fig. 6 hervor, die eine Explosionsansicht des dritten Hybridquerträgers 1' zeigt.

Annähernd senkrecht zur Hauptrichtung des dritten Hybridquerträgers 1' weist die Hauptstrebe 2' im wesentlichen einen u-förmigen Querschnitt auf, wobei Abmessungen und Gestalt des Querschnitts entlang der Hauptrichtung variieren. Es lassen sich im wesentlichen drei Abschnitte an der metallische Hauptstrebe 2' erkennen, innerhalb derer das Profil jeweils nahezu unverändert ist. Zwischen diesen Abschnitten sind verhältnismäßig kurze Übergangszonen vorgesehen, in denen das Profil stetig zwischen den Gestalten der angrenzenden Abschnitte übergeht. Die zum Fahrzeuginnenraum weisenden Kanten der Hauptstrebe 2' sind vorzugsweise auf der gesamten Länge vorteilhaft nach außen umgebogen, um zwei langgestreckte schmale Verbindungsflächen 24', 25' zur Verbindung der Hauptstrebe 2 mit dem Strukturelement aus Kunststoff 3' zu erhalten.

In einem ersten Abschnitt in der Nähe des rechten Endes des Querträgers ist das u-förmige Profil der Hauptstrebe 2' vergleichsweise flach und schmal ausgebildet. Hierbei wird als Tiefe des Profils diejenige Abmessung am Querschnitt der bezeichnet, die für den dargestellten Hybridquerträger 1' nach dessen Einbau in ein Fahrzeug annähernd entlang der Fahrzeuglängsrichtung verläuft. Die Breite des u-förmigen Profils verläuft hingegen annähernd in einer auf das Fahrzeug bezogen vertikalen Richtung. In einem zweiten Abschnitt im Bereich des mittleren Drittels des dritten Hybridquerträgers 1' ist das u-förmige Profil der Hauptstrebe 2' annähernd genauso schmal wie im zuvor beschriebenen Abschnitt, jedoch deutlich tiefer ausgebildet als dort. Auf diese Art steht innerhalb des Trägers Raum für weitere Luftführungen und Luftzutritte zur Verfügung. Im einem dritten Abschnitt auf der Fahrerseite nimmt die Tiefe des u-förmigen Profil wieder ab und erreicht in etwa die Tiefe des Profils im rechten Abschnitt.

In den benachbart zu den äußeren Enden des dritten Hybridquerträgers 1' liegenden Bereichen ist der Profilquerschnitt verhältnismäßig am kleinsten. Dies trägt dem Umstand Rechnung, dass einerseits auf der Beifahrerseite im Gebrauch nur vergleichsweise geringe Kräfte auf diesen eingeleitet werden und andererseits die Fahrerseite durch weitere Maßnahmen mechanisch verstärkt ist. Breite und Tiefe des u-förmigen Profils sind demnach in erster Linie durch den innerhalb des Profils zur Aufnahme von Luftführungen und dergleichen gewünschten kanalförmigen Bauraum vorgegeben.

In der Mitte der Hauptstrebe 2' sind Öffnungen 22', 23' vorgesehen zum Durchtritt von Kabeln, Luftführungen oder Betätigungseinrichtungen. Die Hauptstrebe 2' kann durch Versickungen 24' vorzugsweise im Bereich der Fahrerseite zusätzlich versteift sein.

In einem mittleren Bereich der Hauptstrebe 2' sind unten die sogenannten Tunnelstützen 6' und 7' angeordnet. Diese legen den dritten Hybridquerträger 1' im Bereich seiner Mitte gegenüber der Fahrzeugkarosse in senkrechter Richtung fest und unterdrücken dadurch vor allem dessen erste Eigenschwingung. Zwischen den Tunnelstützen 6', 7' verbleibt ein Bauraum zur Aufnahme von Klimagerät, Rundfunkempfänger und dergleichen. Die Öffnungen 22', 23' an der Unterseite der Hauptstrebe 2' ermöglichen hierbei den Durchtritt der Luftführungen vom Klimagerät in den dritten Hybridquerträger 1' hinein, von wo aus sich die Luftführungen nach links und rechts bis zu den seitlichen Austrittsöffnungen 33', 34' in dem Strukturelement aus Kunststoff 3' fortsetzen, um im Bereich der Mitte und des linken und rechten Endes aus dem Innenraum des herauszutreten und in die Luftaustritte in der Instrumententafel übergehen.

Wie aus den Fig. 6 und 7 hervorgeht, ist unterhalb der Hauptstrebe 2' zu dieser benachbart die Hilfsstrebe 8' angeordnet. Vorzugsweise wird diese Hilfsstrebe 8' aus einem Abschnitt eines Strangpressteils, eines Rechteckrohrs oder dergleichen gefertigt sein. Die Hilfsstrebe 8' ist mit der Hauptstrebe 2' im Bereich der benachbarten Flächen zweckmäßig zumindest punkt- oder abschnittsweise verbunden. Diese Verbindung kann bei geeigneter Materialwahl beispielsweise durch Schweißen, insbesondere Punktschweißen erfolgen. Alternativ kann die Verbindung auch durch Nieten, Schrauben oder Kleben erfolgen. Letztgenannte Möglichkeiten sind als besonders vorteilhaft anzusehen, weil deren Anwendung erwartungsgemäß nur einen geringen Verzug oder im Fall der Klebeverbindung sogar praktisch keinen Verzug an den Bauteilen hervorrufen wird.

Ferner ist die Hilfsstrebe 8' drehsteif mit der linken Tunnelstütze 6' verbunden. Diese Verbindung erfolgt zweckmäßig durch formschlüssiges Ineinandergreifen bestimmter, dazu vorgesehener Abschnitte an der Hilfsstrebe 8' und dem oberen Ende der linken Tunnelstütze 6'. Dieser obere Abschnitt der Tunnelstütze 6' kann ferner zusätzlich mit der Hauptstrebe 2' verbunden sein, um lineare Kräfte in vertikaler Richtung in die Hauptstrebe 2' einzuleiten und dem dritten Hybridquerträger 1' insgesamt eine optimale Steifigkeit zu verleihen.

Die Auslegung der Hilfsstrebe 8' orientiert sich an den größten bei der Benutzung zu erwartenden durch die Lenkstockanbindung 5' auf den Querträger eingeprägten Linear- und Torsionskräften. Alternativ kann anstelle der in den Fig. 6 bis 8 dargestellten hohlprofilierten Hilfsstrebe 8' auch ein rechtwinkliges Längsprofil oder eine ähnlich offen profilierte Hilfsstrebe verwendet werden.

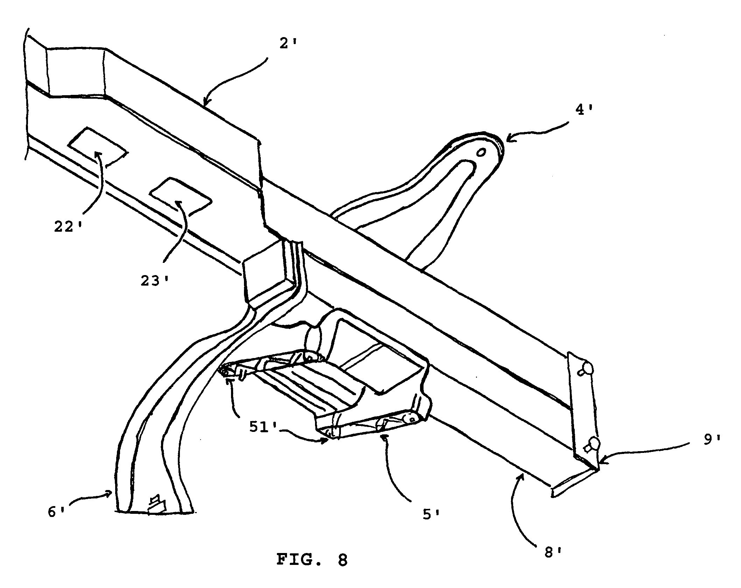

Die Verbindung des Hybridquerträgers mit den A-Säulen der Fahrzeugkarosse erfolgt am linken und rechten Ende über Befestigungswinkel, von denen in Fig. 6 nur der zur fahrerseitigen Anbindung vorgesehene Befestigungswinkel 9' gezeigt ist. Dieser fahrerseitige Befestigungswinkel weist einen Abschnitt zur formschlüssigen Verbindung mit der Hilfsstrebe 8' auf. Diese formschlüssige Verbindung kann wie in den Fig. 6 und 8 gezeigt durch einen rechteckigen Durchbruch 91' in dem Befestigungswinkel 9' erfolgen, in dem ein Ende der Hilfsstrebe 8' aufgenommen ist.

An der der Fahrgastzelle zugewandten Seite ist die Hauptstrebe 2' mit einem Strukturelement 3' aus Kunststoff entlang der Verbindungsflächen 24', 25' verbunden. Die Verbindung erfolgt vorzugsweise durch eine Klebenaht zwischen Oberflächenabschnitten des Strukturelements 3' und den Verbindungsflächen 24', 25'. Alternativ kann die Verbindung auch durch mehrere Schrauben, Nieten oder Bördelränder erfolgen.

Das Strukturelement 3' erstreckt sich im wesentlichen eben entlang der Hauptrichtung des dritten Hybridquerträgers. An den beiden Enden des Strukturelements 3' sind abgewinkelte Befestigungslaschen 31' und 32' vorgesehen, mit denen der Hybridquerträger 1' an den sogenannten A-Säulen einer Fahrzeugkarosse befestigbar ist. Ferner verfügt das Strukturelement 3' vorteilhaft in der Nähe des linken und rechten Endes jeweils über Öffnungen 33', 34' die den Durchtritt der Luft aus dem Inneren des Querträgers in den Bereich der Instrumententafel des Fahrzeugs erlauben. Weitere Öffnungen 35', 36' können im Bereich der Mitte des Strukturelements 3' vorgesehen sein.

Die Lenkstockanbindung 5' ist aus einem festen Werkstoff, vorzugsweise aus Metall gefertigt. Insbesondere kann hierbei eine druckgegossene Aluminiumlegierung zur Anwendung kommen. Die Lenkstockanbindung 5' weist Befestigungsstellen 51' zur Anbringung einer in den Zeichnungen nicht wiedergegebenen Lenkwellenlagereinheit auf. Eine besonders stabile Verbindung zwischen Lenkstockanbindung 5', und der Hauptstrebe 2' wird erhalten, wenn die obere Verbindungsfläche 24 der Hauptstrebe 2' gemäß Fig. 7 mit Befestigungsaugen 26' ausgestattet und mit einem oberen Abschnitt der Lenkstockanbindung 5' durch Schrauben oder Nieten verbunden ist. Eine besonders stabile Verbindung zwischen der Lenkstockanbindung 5' und der Hilfsstrebe 8' wird zudem erhalten, wenn diese Bauteile in einem unteren Bereich der Lenkstockanbindung 5' mit Schrauben und Distanzhülsen gegeneinander gespannt sind.

Oberhalb der Lenkstockanbindung 5' ist an der Hauptstrebe 2' gemäß Fig. 6 und Fig. 8 eine Befestigungslasche 4' angeordnet. Diese verbindet den dritten Hybridquerträger in eingebautem Zustand mit der Fahrzeugstirnwand unterhalb des Rahmens der Fahrzeugwindschutzscheibe und unterdrückt dadurch eine Auslenkung des Querträgers in Fahrzeuglängsrichtung aufgrund einer äußeren Krafteinwirkung. Der zwischen dem Querträger und dem Rahmen der Windschutzscheibe verbleibende Spalt sollte möglichst groß sein, damit im Fall eines Frontalaufpralls des Fahrzeugs die zum Zusammentreffen von Querträger und Rahmen der Windschutzscheibe erforderliche Verformung der Fahrzeugkarosse möglichst groß ist und folglich die an dem Hybridquerträger 1' gehaltene Lenkstockanbindung 5' zusammen mit dem Lenkrad in diesem Fall in möglichst geringem Umfang in die Fahrgastzelle hinein verlagert wird. Die Befestigungslasche 4' wird vorzugsweise aus Metall gefertigt sein, insbesondere bietet sich ein gepresstes Blechteil an. Bei geeigneter Materialwahl kann die Verbindung zwischen der Hauptstrebe 2' und der Befestigungslasche 4' durch Schweißen, insbesondere Punktschweißen erfolgen. Andernfalls kann die Verbindung durch Nieten oder Kleben erfolgen.

Wie aus der Ausschnittansicht in Fig. 8 hervorgeht trifft die Hilfsstrebe 8' in einer besonders bevorzugten Ausführung mit ihrem rechten oder inneren Ende mit dem oberen Ende der fahrerseitigen Tunnelstütze 6' zusammen. Dadurch werden vertikal auf die Lenkstockanbindung 5' wirkende Kräfte weniger in die Hauptstrebe 2' eingeleitet, sondern vor allem von der Hilfsstrebe 8' zwischen der linken, seitlichen Karosserieanbindung 9' und der fahrerseitigen Tunnelstütze 6' aufgeteilt.

Der beschriebene dritte Hybridquerträger 1' wird auf besonders kostengünstige Art erhalten, wenn die Hauptstrebe 2' aus einem gepressten Stahl- oder Aluminiumblech gefertigt wird. Zweckmäßig werden die Tunnelstützen 6', 7' und die Befestigungslasche 5' aus dem selben Material gefertigt. Dies lässt ein Verschweißen dieser Teile mit der Hauptstrebe 2' zu. Alternativ kann die Verbindung aber auch durch Schrauben, Nieten oder Kleben erfolgen. Die Hilfsstrebe 8' auf der Fahrerseite wird mit der Unterseite der Hauptstrebe 2' vorzugsweise verklebt, wobei ein auf ein eventuell vorangehendes Schweißen oder Punktschweißen der vorbeschriebenen Anordnung aus Hauptstrebe 2', Tunnelstützen 6', 7' und Befestigungslasche 5' zurückgehender Verzug der Hauptstrebe 2' in der Regel nicht zu einem überschreiten des zulässigen Klebespalts führen wird. Ein Richten nach dem Schweißen dürfte in den meisten Fällen entbehrlich sein. Ein Richten wird aus den selben Gründen auch nicht vor dem Zusammenfügen und Verkleben der gesamten in den vorbeschriebenen Schritten geschaffenen Anordnung aus Hauptstrebe 2', Tunnelstützen 6',7', Hilfsstrebe 8' und Befestigungslasche 4' mit dem Strukturelement aus Kunststoff 3' notwendig sein. Auch in diesem Schritt werden die zulässigen Toleranzen für den Klebespalt den beim Schweißen eventuell auftretenden Verzug in der Regel aufnehmen können. In einem letzten Schritt wird die Lenkstockanbindung 5' mit den betreffenden Abschnitten der Hilfsstrebe 8', der Hauptstrebe 2' und des Strukturelements aus Kunststoff 3' vorzugsweise durch mehrere Schrauben verbunden.

## Patentansprüche

1. Hybridquerträger (1) für ein Fahrzeug, aufweisend eine metallische Querstrebe (2) mit einem in Richtung der Hauptrichtung des Hybridquerträgers (1) in der Form einer offenen Rinne verlaufenden Abschnitt, dessen Längskanten (21, 22) mit einem Strukturelement aus Kunststoff (3) in einem Abschnitt verbunden sind.

2. Hybridquerträger nach Anspruch 1, wobei die Verbindung zwischen der metallischen Querstrebe (2) und dem Strukturelement aus Kunststoff (3) eine Klebeverbindung ist.

3. Hybridquerträger nach Anspruch 2, wobei die Querstrebe (2) im wesentlichen entlang ihrer gesamten Längserstreckung rinnenförmig und mit dem Strukturelement (3) verklebt ist.

4. Hybridquerträger einem der vorangehenden Ansprüche, wobei der Raumbereich innerhalb des rinnenförmigen Abschnitts der metallische Querstrebe (2) ausgehend von der Mitte des Hybridquerträgers (1) bis zu dessen linken und rechten Ende jeweils einen offen und einen durchgehenden Kanal zur Aufnahme einer Luftführung aufweist.

5. Querträger für ein Fahrzeug, aufweisend eine Hauptstrebe (2') mit einem in Richtung der Hauptrichtung des Querträgers (1') in der Form einer offenen Rinne verlaufenden Abschnitt, eine dazu benachbart angeordnete Hilfsstrebe (8), eine Tunnelstütze (6') und eine Lenkstockanbindung (5'), wobei die Hilfsstrebe (8') mit der Tunnelstütze (6') und der Lenkstockanbindung (5') drehsteif verbunden ist.

6. Querträger für ein Fahrzeug nach Anspruch 5, wobei Mittel (9') zum drehsteifen Verbinden der Hilfsstrebe (8') im Bereich des äußeren Endes der Hauptstrebe (2') mit einer Stelle einer Kraftfahrzeugkarosse vorgesehen sind.

7. Querträger für ein Fahrzeug nach einem der Ansprüche 5 und 6, wobei die Hilfsstrebe (8') unterhalb der Hauptstrebe (2') angeordnet ist.

8. Querträger für ein Fahrzeug nach Anspruch 7, wobei die Oberseite der Hilfsstrebe (8') mit der Unterseite der Hauptstrebe (2') verklebt ist.

9. Querträger für ein Fahrzeug nach einem der Ansprüche 5 bis 8, wobei die Hilfsstrebe (8') ein Quadratrohr ein Rechteckrohr oder ein Abschnitt eines Strangpressprofils ist.

10. Querträger für ein Fahrzeug nach einem der Ansprüche 5 bis 9, wobei die Hauptstrebe (2') ein rinnenförmiges Profil aufweist, innerhalb dessen Luftführungen angeordnet sind.

11. Querträger nach einem der vorangehenden Ansprüche, wobei die Hauptstrebe (2') aus Metall ist.

12. Querträger für ein Fahrzeug nach Anspruch 11, wobei die Hauptstrebe (2') aus Metallblech, insbesondere aus Stahlblech oder Aluminiumblech gepresst ist.

13. Hybridquerträger (1'), aufweisend einen Querträger nach einem der Ansprüche 5 bis 12 und ein Strukturelement (3'), wobei das Strukturelement mit der Hauptstrebe (2') abschnittsweise verklebt ist.

14. Hybridquerträger (1') nach Anspruch 13, wobei das Strukturelement (3') aus Kunststoffmaterial, insbesondere aus einem glasfaserverstärkten Kunststoffmaterial spritzgegossen ist.
